# FASCICULE DE BREVET EUROPEEN

(11) **EP 0 783 860 B1**
(45) Date de publication et mention de la délivrance du brevet: **15.12.1999**
(21) Numéro de dépôt: 97420006.5
(22) Date de dépôt: 09.01.1997
(51) Int. Cl.: A47J 37/06

(54) **Appareil de cuisson présentant plusieurs allures de chauffe**
Kochgerät mit mehreren Kochleistungen
Cooking vessel with variable cooking power

(30) Priorité: 10.01.1996 FR 9600394
(43) Date de publication de la demande: 16.07.1997
(73) Titulaire: SEB S.A., 69130 Ecully (FR)
(72) Inventeur: Perrin, Jean-François, 88200 Dommartin les Remiremont (FR); Milliot, Françis, 88200 Remiremont (FR)

(56) Documents cités:
- EP-A- 0 623 303
- EP-A- 0 645 114
- FR-A- 2 511 125
- US-A- 4 153 833

## Description

La présente invention se rapporte au domaine technique général des appareils d'électroménagers destinés à la préparation de produits alimentaires.

L'invention concerne plus particulièrement un appareil de cuisson et notamment un gril-viande disposant d'au moins une plaque ou grille chauffée par des éléments chauffants électriques et supportant les produits alimentaires.

La présente invention se rapporte donc en particulier à un appareil électroménager pour la préparation de produits alimentaires constitué d'une plaque de chauffe rapportée sur un bâti lequel comporte des éléments chauffants électriques fournissant l'énergie thermique à la plaque de chauffe et/ou de cuisson et des moyens de régulation en température de l'appareil.

Le document EP-A-645 114 montre un tel appareil électroménager.

Il est ainsi déjà connu de réaliser des appareils de cuisson du type gril-viande comportant un thermostat de réglage de la température de cuisson. Un problème lié à la conception de tels appareils réside dans leur prix de revient relativement élevé consécutivement à la mise en place d'un thermostat réglable dans de tels appareils. Ceci constitue un inconvénient majeur dans la mesure où les utilisateurs de tels appareils ne procèdent qu'à un réglage maximum du thermostat afin d'obtenir des cuissons rapides et efficaces. Il est en outre souvent utile de disposer d'une température plus faible que la température de cuisson de manière à pouvoir maintenir au chaud les aliments cuits ou grillés. Il en résulte un autre inconvénient, lequel est lié à l'imprécision du réglage de la température de maintien au chaud après les opérations de cuisson. En effet, il est souvent très difficile d'obtenir une température réduite sur des plaques de cuisson ou de grillage permettant de maintenir au chaud les aliments sans toutefois poursuivre la cuisson et éventuellement détériorer la qualité des aliments.

L'objet de la présente invention vise donc à réaliser un appareil de cuisson du type gril-viande dépourvu de thermostat réglable, et dont les moyens de régulation thermique sont susceptibles de procurer à l'utilisateur dudit appareil des modes de fonctionnement satisfaisants et distincts.

Un autre objet de la présente invention vise à réaliser un appareil dont le prix de revient ou le coût de fabrication est réduit.

Les objets assignés à la présente invention sont atteints avec un appareil électroménager pour la préparation de produits alimentaires, constitué d'une plaque de chauffe rapportée sur un bâti lequel comporte des éléments chauffants électriques foumissant l'énergie thermique à la plaque de chauffe et des moyens de régulation en température de l'appareil, comportant un limiteur thermique à température fixe, pilotant l'alimentation électrique des éléments chauffants et permettant de maintenir la température de la plaque de chauffe en deçà d'une valeur seuil, caractérisé en ce que les moyens de régulation comportent des moyens de réglage susceptibles de soumettre ledit limiteur à une influence thermique complémentaire pour modifier la valeur seuil de température de la plaque de chauffe.

D'autres caractéristiques et avantages apparaîtront plus en détails dans la description donnée ci-après, à titre d'exemple, en référence aux dessins annexés dans lesquels :
- la figure 1 représente une vue globale en perspective d'un exemple de réalisation d'un appareil conforme à l'invention,
- la figure 2 représente une vue éclatée et en perspective d'une partie comprenant les moyens de régulation d'un appareil conforme à l'invention.

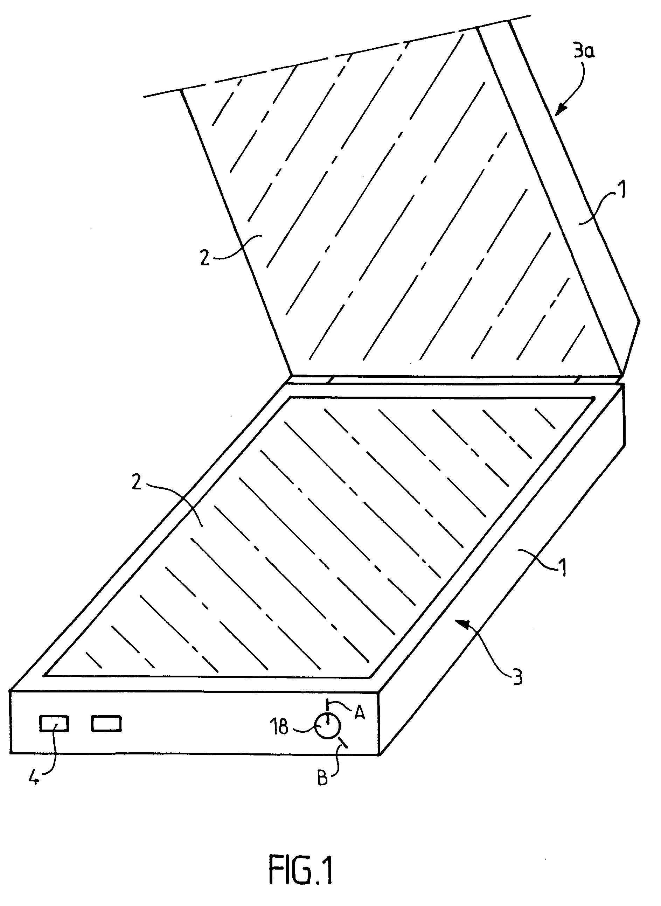

Un exemple de réalisation d'un appareil conforme à l'invention est représenté à la figure 1. Cette dernière montre un appareil de grillage constitué notamment d'un bâti 1 et d'une plaque chauffante 2.

Selon une variante de réalisation préférentielle de l'appareil conforme à l'invention, il est prévu de réaliser ce dernier en deux parties. Une première partie fixe 3 que l'on pose sur un support est ainsi pourvue d'un volet 3a rabattable sur ladite partie fixe 3.

Avantageusement, la partie fixe 3 et le volet 3a sont constitués d'un bâti 1 sur lequel est rapportée une plaque ou une grille de cuisson telle qu'une plaque de chauffe 2. Le volet 3a peut également comporter des éléments chauffants 5.

A titre de variante, le volet 3a peut être utilisé sans moyens de chauffe et uniquement pour exercer une pression sur les produits alimentaires disposés sur la plaque de chauffe 2 de la partie fixe 3.

L'appareil conforme à l'invention peut également être utilisé de façon déplié en présentant une surface de cuisson double. Les plaques de chauffe 2 de la partie fixe 3 et du volet 3a s'étendent ici dans un même plan d'extension de préférence horizontal ou quasi horizontal.

Les éléments chauffants 5 sont montés dans le bâti 1 sous la plaque de chauffe 2. Préférentiellement les éléments chauffants 5 comprennent au moins un élément chauffant blindé. Les éléments chauffants 5 montés dans la partie fixe 3 présentent à titre d'exemple une puissance distincte de la puissance que présente les éléments chauffants 5 montés dans le volet 3a. Le bâti 1 est par exemple pourvu d'au moins un voyant et/ou d'un interrupteur 4 de mise sous tension des éléments chauffants 5.

L'appareil conforme à l'invention comporte également des moyens de régulation en température. Ces derniers comportent un limiteur 10 thermique permettant de maintenir la température de la plaque de chauffe 2 en deçà d'une valeur seuil. Le limiteur 10 thermique permet de couper l'alimentation électrique des éléments chauffants 5 lorsque la plaque de chauffe 2 a atteint une température limite définie et déterminée par ledit limiteur 10. Les éléments chauffants 5 sont remis sous tension lorsque la température de la plaque chauffante 2 a chuté de l'ordre de 30 degrés C.

Avantageusement le limiteur 10 est en contact directement avec la plaque de chauffe 2. Le limiteur 10 présente par exemple une structure composée de pattes métalliques 10a fixées ou maintenues sous la plaque de chauffe 2 par tous moyens et notamment par soudage. Selon une variante de réalisation de l'appareil conforme à l'invention, le limiteur 10 est déplaçable entre différentes positions d'influence thermique, en contact ou non avec une plaque de chauffe 2. Le limiteur 10 est également pourvu de connexions électriques reliant les éléments chauffants 5 à une alimentation électrique.

Les moyens de régulation thermiques comportent des moyens de réglage susceptibles de soumettre le limiteur 10 à une influence thermique complémentaire pour modifier la valeur seuil de la température de la plaque de chauffe 2. Cette valeur seuil est bien évidemment déterminée en partie par le limiteur 10. Ainsi un apport supplémentaire d'énergie thermique au voisinage du limiteur 10 permet de réaliser une modification locale de son environnement thermique. Le limiteur 10 sera ainsi sous l'influence de la chaleur dégagée par la plaque de chauffe 2 et de la chaleur apportée en complément. L'image thermique que prendra en compte le limiteur 10 ne correspondra plus à la température réelle de la plaque de chauffe 2, mais à une température supérieure. Ceci engendre donc une régulation à une température plus basse de la plaque de chauffe 2.

L'appareil conforme à l'invention est donc pourvu d'un leurre thermique permettant de couper l'alimentation électrique des éléments chauffants 5 lorsque la température de la plaque chauffante 2 aura atteint une valeur seuil inférieure à celle obtenue avec un limiteur 10 non soumis à une influence thermique complémentaire. La variation de la valeur seuil dépend bien évidemment de la quantité d'énergie apportée audit limiteur 10 et ne provenant pas de la plaque de chauffe 2.

Avantageusement les moyens de réglage sont actionnés à l'aide d'un organe de commande 18 agencé sur une paroi 15 du bâti 1 et permettant d'obtenir au moins deux valeurs seuil distinctes.

L'organe de commande 18 est réalisé par exemple avec un bouton de réglage mobile entre deux positions A et B correspondant respectivement à une valeur seuil haute et à une valeur seuil basse. La valeur seuil haute correspond à une température de cuisson ou de grillage alors que la valeur seuil basse correspond par exemple à une température de maintient au chaud ou à une température de cuisson d'articles alimentaires sensibles du type poissons.

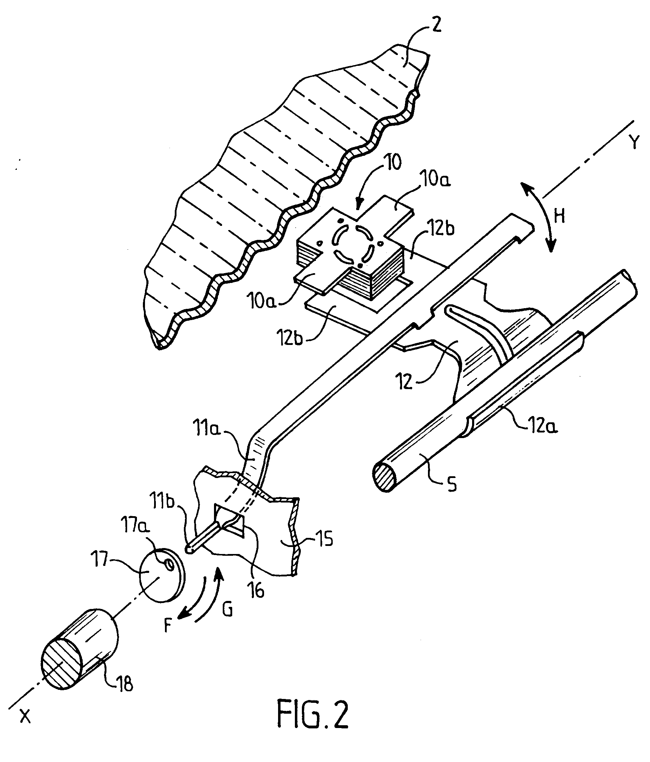

En outre les moyens de réglage sont associés à une pièce métallique 12, représentée par exemple à la figure 2, susceptible de réaliser un pont thermique entre le limiteur 10 et une zone présentant un autre potentiel thermique. Ce dernier est réalisé par exemple directement ou indirectement avec les éléments chauffants 5. La pièce métallique 12 est solidaire d'une tige 11a réalisant une bielle actionnée par l'organe de commande 18. La tige 11a, réalisée par tous moyens, est fixée sur la pièce métallique 12 soit directement, soit indirectement avec un moyen de rappel élastique, pour déplacer ladite pièce métallique 12 lorsque la tige 11a est actionnée. Un basculement suivant la flèche F ou G indiquée à la figure 2, entraîne donc la pièce métallique 12.

Une extrémité 11b de la tige 11a s'étend avantageusement suivant la direction d'extension Y de ladite tige 11a, et éventuellement de façon décalée par rapport à cette direction. L'extrémité 11b traverse également une fente 16 ménagée dans la paroi 15. La fente 16 sert d'appui et de point de basculement pour la tige 11a. Ainsi un basculement de l'extrémité 11b engendre un basculement en sens inverse de la portion de la tige 11a fixée sur la pièce métallique 12. L'extrémité 11b est également montée sur une came 17. Cette dernière est constituée d'un disque pourvu d'un perçage excentré 17a dans lequel s'engage l'extrémité 11b. La came 17 est également montée en rotation sur le bâti 1, suivant un axe X décalé par rapport à l'extrémité 11b. Un mouvement de rotation de la came 17, suivant les flèches F et G représentées à la figure 2, provoque par conséquent un basculement de la tige 11a. L'organe de commande 18, actionné par l'utilisateur, est en outre solidaire de la came 17.

D'autres mécanismes tels qu'un dispositif de glissement et/ou de coulissement pourraient également être adaptés pour déplacer la pièce métallique 12 sans toutefois sortir du cadre de la présente invention. Ainsi un dispositif de coulissement entre les pattes métalliques 10a et les languettes de contact 12b, permet d'obtenir un dosage de l'énergie thermique complémentaire apportée au limiteur 10. Différentes valeurs seuil sont alors accessibles.

En conséquence un mouvement de rotation de l'organe de commande 18, permet de déplacer la pièce métallique 12 de manière à faire venir cette dernière en contact avec le limiteur 10. Avantageusement l'extrémité de la pièce métallique 12 est constituée d'au moins une languette de contact 12b susceptible de venir en appui contre au moins une patte métallique 10a.

La configuration de la pièce métallique 12 est telle que son autre extrémité présente une forme profilée 12a enveloppant au moins partiellement l'élément chauffant 5, lequel est généralement cylindrique. Les formes de la pièce métallique 12 et de la tige 11a réalisant une bielle sont optimisées de façon à impartir à la pièce métallique 12 un mouvement d'approche et de séparation de l'élément chauffant 5 et des pattes métalliques 10a.

D'autres variantes et aménagements connus sont également envisageables pour réaliser un système mécanique de bielle susceptible de mettre en contact ou de séparer deux pièces de manière à réaliser un pont thermique entre lesdites pièces. La fixation de la tige 11a, sur la pièce métallique 12 se fait par tous moyens connus.

La plaque de chauffe 2 est réalisée en aluminium, traité ou revêtu d'une couche anti-adhésive du type Téflon. Alternativement, la plaque de chauffe 2 peut également comporter une pierre chauffante.

Selon un fonctionnement préférentiel de l'appareil conforme à l'invention, l'utilisateur actionne l'interrupteur 4 pour alimenter les éléments chauffants 5. La plaque de chauffe va présenter une température s'établissant autour de la valeur seuil basse lorsque l'utilisateur aura positionné l'organe de commande 11 sur la position B. Le positionnement de l'organe de commande 11 sur la position A aura pour conséquence d'augmenter la température de la plaque de chauffe 2 de façon à pouvoir utiliser cette dernière pour des opérations de cuisson.

L'avantage de l'appareil électroménager conforme à l'invention est obtenu principalement par la suppression du thermostat réglable.

Un autre avantage de l'appareil conforme à l'invention réside dans l'obtention de deux allures de chauffe ou de niveaux de température distincts et stables pour différentes utilisations.

Un avantage complémentaire réside dans la réduction importante du prix de revient d'un tel appareil.

## Revendications

1. Appareil électroménager pour la préparation de produits alimentaires, constitué d'une plaque de chauffe (2) rapportée sur un bâti (1) lequel comporte des éléments chauffants (5) électriques fournissant l'énergie thermique à la plaque de chauffe (2) et des moyens de régulation en température de l'appareil, comportant un limiteur (10) thermique à température fixe, pilotant l'alimentation électrique des éléments chauffants (5) et permettant de maintenir la température de la plaque de chauffe (2) en deçà d'une valeur seuil, caractérisé en ce que les moyens de régulation comportent des moyens de réglage susceptibles de soumettre ledit limiteur (10) à une influence thermique complémentaire pour modifier la valeur seuil de température de la plaque de chauffe (2).

2. Appareil selon la revendication 1 caractérisé en ce que le limiteur (10) thermique est en contact directement avec la plaque de chauffe (2).

3. Appareil selon la revendication 1 ou 2, caractérisé en ce que les moyens de réglage sont actionnés à l'aide d'un organe de commande (11) agencé sur le bâti (1) et permettant d'obtenir au moins deux valeurs seuil distinctes.

4. Appareil selon l'une des revendications 1 à 3, caractérisé en ce que les moyens de réglage sont associés à une pièce métallique (12) susceptible de réaliser un pont thermique entre le limiteur (10) et une zone présentant un autre potentiel thermique.

5. Appareil selon l'une des revendications 1 à 4, caractérisé en ce que les éléments chauffants (5) comprennent au moins un élément chauffant blindé.

6. Appareil selon l'une des revendications 1 à 5 caractérisé en ce que la plaque de chauffe (2) comporte une pierre chauffante.

7. Appareil selon l'un des revendications 1 à 6 caractérisé en ce qu'il constitue un gril-viande.

## Claims

1. A household electrical appliance for preparing food, the appliance comprising a hot plate (2) fitted to a support structure (1) which includes electrical heater elements (5) for supplying heat energy to the hot plate (2) and means for regulating the temperature of the appliance, said means comprising a fixed temperature limiter (10) controlling the electrical power supply to the heater elements (5) and enabling the temperature of the hot plate (2) to be maintained below a threshold value, the appliance being characterized in that the regulation means include adjustment means suitable for subjecting said limiter (10) to an additional temperature influence to modify the temperature threshold value of the hot plate (2).

2. An appliance according to claim 1, characterized in that the temperature limiter (10) is directly in contact with the hot plate (2).

3. An appliance according to claim 1 or 2, characterized in that the adjustment means are actuated by a control member (11) disposed on the support structure (1) and enabling at least two distinct threshold values to be obtained.

4. An appliance according to any one of claims 1 to 3, characterized in that the adjustment means are associated with a metal part (12) capable of providing a heat bridge between the temperature limiter (10) and a zone having another temperature potential.

5. An appliance according to any one of claims 1 to 4, characterized in that the heater elements (5) comprise at least one metal-clad heater element.

6. An appliance according to any one of claims 1 to 5, characterized in that the hot plate (2) includes a heating stone.

7. An appliance according to any one of claims 1 to 6, characterized in that it constitutes a meat grill.

## Patentansprüche

1. Elektro-Haushaltsgerät zur Zubereitung von Nahrungsmitteln, mit einer Heizplatte (2), die auf ein Gestell (1) aufgesetzt ist, das elektrische Heizelemente (5) enthält, welche die Heizplatte (2) mit thermischer Energie versorgen, und das Mittel zur Regulierung der Temperatur des Gerätes enthält, die einen thermischen Begrenzer (10) für eine fixe Temperatur enthalten, welcher die Stromversorgung der Heizelemente (5) steuert und es gestattet, die Temperatur der Heizplatte (2) unterhalb eines Schwellwertes zu halten, dadurch gekennzeichnet, daß die Mittel zur Regulierung Stellmittel enthalten, welche geeignet sind, den Begrenzer (10) einer zusätzlichen thermischen Einwirkung auszusetzen, um den Schwellwert für die Temperatur der Heizplatte (2) zu verändern.

2. Gerät nach Anspruch 1, dadurch gekennzeichnet, daß der thermische Begrenzer (10) direkt mit der Heizplatte (2) in Kontakt steht.

3. Gerät nach Anspruch 1 oder 2, dadurch gekennzeichnet, daß die Stellmittel mit Hilfe eines Bedienelementes (11) betätigt werden, welches am Gestell (1) angebracht ist und durch welches wenigstens zwei unterschiedliche Schwellwerte erreicht werden.

4. Gerät nach einem der Ansprüche 1 bis 3, dadurch gekennzeichnet, daß die Stellmittel mit einem Metallteil (12) verbunden sind, welches geeignet ist, eine thermische Brücke zwischen dem Begrenzer (10) und einer Zone, die ein anderes thermische Potential aufweist, zu bilden.

5. Gerät nach einem der Ansprüche 1 bis 4, dadurch gekennzeichnet, daß die Heizelemente (5) wenigstens ein gekapseltes Heizelement umfassen.

6. Gerät nach einem der Ansprüche 1 bis 5, dadurch gekennzeichnet, daß die Heizplatte (2) einen Heizstein enthält.

7. Gerät nach einem der Ansprüche 1 bis 6, dadurch gekennzeichnet, daß es einen Fleischgrill bildet.
